(19) **Europäisches Patentamt / European Patent Office / Office européen des brevets**

(11) **EP 4 086 789 A1**

(12) **EUROPEAN PATENT APPLICATION**

(43) Date of publication:
**09.11.2022 Bulletin 2022/45**

(21) Application number: **21306565.9**

(22) Date of filing: **08.11.2021**

(51) International Patent Classification (IPC):
**G06F 16/953** $^{(2019.01)}$    **G06F 16/29** $^{(2019.01)}$

(52) Cooperative Patent Classification (CPC):
**G06F 16/953; G06F 16/29**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.05.2021 FR 2104801**

(71) Applicant: **Naver Corporation**
**Seongnam-si, Gyeonggi-do 13561 (KR)**

(72) Inventors:
- **KLETTI, TILL**
 **38700 LA TRONCHE (FR)**
- **RENDERS, JEAN-MICHEL**
 **38950 QUAIX EN CHARTREUSE (FR)**

(74) Representative: **Regimbeau**
**20, rue de Chazelles**
**75847 Paris Cedex 17 (FR)**

(54) **SYSTEM AND METHOD FOR RANKING OBJECTS**

(57) A method for ranking a set of objects is disclosed. The method includes: receiving a set of objects and a set of objective functions; defining a decision space using a Permutohedron having n decision variables, where n is the number of objects to rank and where vertex coordinates of the Permutohedron represent exposure associated with the corresponding rank; determining a Pareto-set for the set of objective functions; with a Pareto-optimal point in the Pareto-set, determining a distribution over rankings for the objects in the set using the decision space; and selecting a sequence of rankings for the set of objects from the distribution over rankings in accordance with their proportions.

**FIG. 12**

```
 1: procedure Pareto(INPUT: γ, target exposure v⁽⁰⁾, ρ)
 2:     G_k ← Σ_{i=1}^{k} γ_i
 3:     V_k ← Σ_{i=1}^{k} v_i^{(0)}
 4:     I_0 ← {n}                           ▷ Initilize the set of splits
 5:     ρ^{(0)} ← ρ − (ρ^T 1)1/n             ▷ Project ρ on the polytope
 6:     l ← 0
 7:     while ρ^T v^{(l)} < ρ^T γ do         ▷ While utility is not maximal
 8:         D_k ← Σ_{i=1}^{k} ρ_i^{(l)}
 9:         λ_l ← min_k { (G_k − V_k)/D_k | D_k < 0 }
10:         v^{(l+1)} ← v^{(l)} + λ_l ρ^{(l)}   ▷ Compute the intersection
11:         V_k ← Σ_{i=1}^{k} v_i^{(l)}
12:         I_{l+1} = {i_1, …, i_{l+1}} ← which(V_k == G_k)  ▷ I_{l+1} is the
        set of splits identifying the current face.
13:         {i_j} ← I_{l+1} \ I_l             ▷ Identify the new split
14:         ψ ← Σ_{m=i_{j−1}}^{i_j} γ_m / Σ_{m=i_j+1}^{i_{j+1}} γ_m
15:         ν ← (0, …, 0, 1, …, 1, −ψ, …, −ψ, 0, …, 0)  ▷ The new
                              i_{j−1},…,i_j  i_j+1,…,i_{j+1}
        normal vector to the face that was just intersected.
16:         ρ^{(l+1)} ← ρ^{(l)} − [(ρ^{(l)})^T ν]ν/‖ν‖_2^2  ▷ Project ρ on the
        new face
17:         l ← l + 1
18:     end while
19: end procedure, OUTPUT: a sequence of at most (n-1) points
        (v^{(l)})_{l∈{1,…,n−1}} that defines the Pareto curve as the union of
        the line segments connecting these points.
```

## Description

PRIORITY CLAIM

This application claims priority from French Patent Application, Serial Number FR 2104801, filed May 6, 2021, which contents are hereby incorporated by reference.

FIELD OF THE INVENTION

The field of this invention is information retrieval and recommendation. More particularly, the invention relates to a method for fairly ranking objects that are retrieved.

BACKGROUND OF THE INVENTION

Generally, information retrieval and recommendation involve two-stages. The first stage focuses on retrieving a candidate set of results and the second stage focuses on ranking the candidate set of results.

The candidate set of results may include search results (e.g., lists of links to documents from search results in response to a query) and recommendations (e.g., lists of Points-Of-Interest recommendations in response to an identified location, or lists of recommendations of songs in response to genre selection, etc.).

Users (i.e., content consumers) expect the most relevant results to have the highest exposure, whereas providers (i.e., content producers) seek to have a fair (i.e., equitable) exposure to their content. Hence, when ranking the candidate set of results in the second stage, it is preferred that the ranking method balances between utility (which represents users who accesses the set of results) and fairness (which represents the providers who make up the set of results).

While some ranking methods exist that balance utility and fairness, their complexity is generally prohibitive to enable their use in any realistic scenario. Hence, there continues to be a need for an optimal method (i.e. capable to compute exact optimal solutions) which complexity is reduced compared to existing methods so as to enable Web-scale fair-useful ranking for instance.

SUMMARY OF THE INVENTION

For these purposes, the present invention provides according to a first aspect a computer-implemented method for ranking a set of objects that includes:

receiving the set of objects and a set of objective functions;
defining a decision space having n decision variables using a Permutohedron, where $n$ is the number of objects to rank and where vertices of the Permutohedron represent permutations of exposures provided to the objects in the set by corresponding rankings;
determining a Pareto-set for the set of objective functions;
with a Pareto-optimal point in the Pareto-set, determining a distribution over rankings for the objects in the set using the decision space, where a proportion is associated to each ranking in said distribution; and
selecting a sequence of rankings for the objects in the set from the distribution over rankings in accordance with their proportions.

Certain preferred, but non-limiting aspects of the method according to the first aspect are as follows:

- the set of objective functions comprises a quadratic function and a linear function;
- the quadratic function is a fairness function and the linear function is a utility function;
- the fairness function is a squared L2-norm of the difference between a vector made up of the decision variables and a target vector;
- it further comprises receiving a relevance score for each object in the set, a list of exposures provided to the objects in the set which are each associated with a rank, a ranking fairness objective function and a ranking utility objective function;
- determining the Pareto-set for the set of objective functions comprises computing the Pareto-set within the decision space considering the ranking fairness objective function and the ranking utility objective function, and wherein determining the distribution over rankings for the objects in the set using the decision space comprises receiving a specified point in the Pareto-set which translates to a target exposure across the objects in the set within the decision space, and, using the target exposure, determining a distribution over rankings which achieve on average the target exposure for the objects in the set, each ranking of the distribution over rankings corresponding to a vertex in the decision space.
- said determining the distribution over rankings for the objects in the set using the decision space further comprises for the number of objects in the set:

    ○ (i) determining an arbitrary vertex of the decision space;
    ○ (ii) drawing a line starting at the arbitrary vertex through the target exposure until the line intersects a face of the decision space;
    ○ (iii) repeating (i) and (ii) on the intersected face of the decision space using the new intersection point instead of the target exposure, until the newly intersected face is a vertex;

- the objects in the set comprises a plurality of queries;
- the objects in the set are identified in response to a query;
- the objects in the set comprises a plurality of recommendations;

- the objects in the set are identified in response to a map location.

According to a second, a third and a fourth aspect, the invention provides a computer program product comprising code instructions which, when said program is executed on a computer, cause the computer to perform the method according to the first aspect of the invention; a computer-readable medium having stored thereon the computer program product; and a data processing device comprising a processor configured to perform the method according to the first aspect of the invention.

BRIEF DESCRIPTION OF THE DRAWINGS

The above and other objects, features and advantages of this invention will be apparent in the following detailed description of illustrative embodiments thereof, which is to be read in connection with the accompanying drawings wherein:

- figure 1 illustrates an example of architecture in which the disclosed methods may be performed;
- figure 2 illustrates a flow diagram setting out an embodiment of the disclosed method;
- figure 3 illustrates an example Permutohedron for n=4;
- figure 4 illustrates a procedure for decomposing a point in the Permutohedron into a combination of at most n of the Permutohedron's vertices;
- figure 5 illustrates an example generalized *Permutohedron* (which is referred to herein as an *Expohedron*) for n=3,
- figure 6 sets out pseudo code of a decomposition method that can be employed in the disclosed method;
- figure 7 illustrates equi-utility curves and max-utility solution in the *Expohedron* (n=3);
- figure 8 illustrates max-utility solution in the *Expohedron* with Relevance Ties (n=3);
- figures 9 and 10 illustrate optimal demographic and meritocratic fairness solutions and equi-fairness curves in the *Expohedron* (n=3);
- figure 11 illustrates a Pareto-set in the *Expohedron* (n=3); and
- figure 12 sets out pseudo code for Pareto-set identification.

DETAILED DESCRIPTION

*1. Architecture*

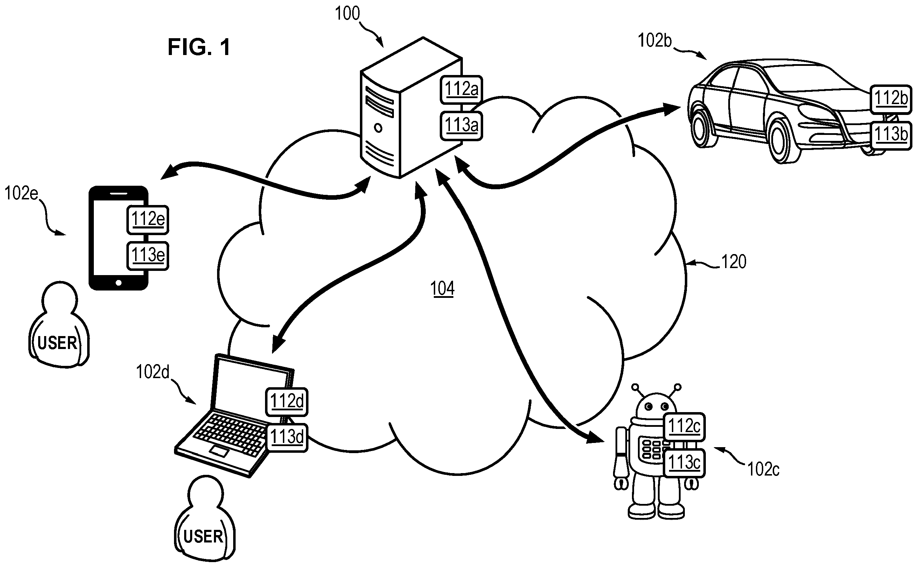

The disclosed computer-implemented method and embodiments for ranking objects may be implemented within an architecture such as illustrated in Figure 1, which comprises server 100 and one or more client devices 102 that communicate over a network 104 (which may be wireless and/or wired) such as the Internet for data exchange. Server 100 and the client devices 102 include a data processor 112 and memory 113 such as a hard disk. The client devices 102 may be any device that communicates with server 100, including autonomous vehicle 102b, robot 102c, computer 102d, or cell phone 102e.

*2. Overview*

The disclosed method expresses the problem of designing optimal fair-useful ranking policies using a set of optimisation/decision variables. In particular, a first feature of this method is to choose as optimisation/decision variables the "item exposure" variables, that act as key links between important objectives in what constitutes an ideal ranking: in particular the utility objective, which represents the user or consumer viewpoint, and the fairness criterion which represents typically the provider or supplier viewpoint.

Advantageously, a second feature of the disclosed method is to express the optimisation problem with only n decision variables in a decision space which is a generalized Permutohedron (which is referred to herein as an Expohedron), where *n* is the number of objects to rank, while keeping the expressiveness of the policy to fully control the utility and fairness objectives separately and exactly. This decision space allows to represent any distribution (or convex combination) over rankings (or, synonymously, over permutations) and to reason geometrically in this space to solve the Utility-Fairness trade-off. In particular, the whole Pareto set of the MOO (Multi-objective Optimisation) problem can be easily obtained without passing through explicit scalarisation techniques.

The method determines the optimal policy using unbiased estimates of relevance scores with uniform estimation quality over the objects and an exposure model with known structure and parameters.

The disclosed method operates with a complexity of $O(n^2 \log n)$. The method applies geometric reasoning. Most of the method's steps may be expressed in closed-form equations. Other of the method's steps are sorting operations. Moreover, the entire Pareto-set can be generated analytically and geometrically, without relying on any scalarization technique to scan the whole frontier.

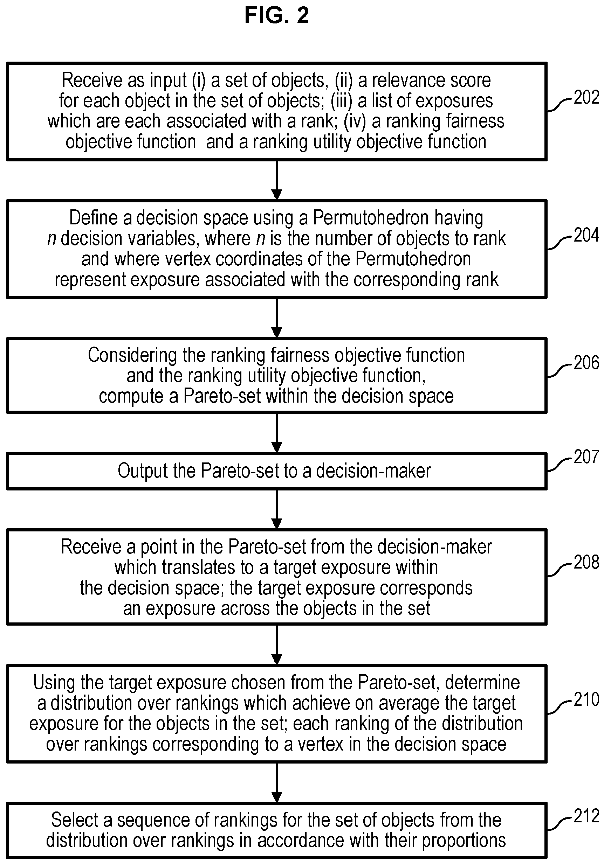

Referring now to Figure 2 which illustrates a flow diagram setting out an embodiment of the disclosed methods for ranking a set of objects. The method according to the embodiment of Figure 2 may be performed at server 100.

At 202 in Figure 2, server 100 receives a set of objects, an unbiased relevance score for each object in the set of objects, a list of exposures which are each associated with a rank, and a ranking fairness objective function and a ranking utility objective function. At 204 in Figure 2, server 100 defines a decision space using a Permutohedron having n decision variables, where n is the number of objects to rank and where vertices of the Permutohedron represent permutations of exposures provided to the objects in the set by corresponding rankings.

At 206 in Figure 2, using the ranking fairness objective function and the ranking utility objective function, server 100 computes a Pareto-set (i.e., the set of non-dominated solutions where there are no other solutions that are better for all objective functions; for example, where there are no exposures that offer larger utility and better fairness at the same time) within the decision space defined by the list of exposures between a first point representing optimal fairness and a second point representing optimal utility. The possible optimal fairness types may include demographic fairness and meritocratic fairness. As described in more detail below, the ideal exposure for demographic fairness allows equal exposure, whereas for meritocratic fairness exposure may be defined using a vector of relevance. In yet other embodiments, the optimal fairness type may be customized based on a defined proportion other than fairness (e.g., for allocating prize money to be paid).

It shall be noted that the invention considers only Individual fairness, and not Group fairness. Individual fairness tries to ensure equity at the level of individual objects, while Group fairness assumes that objects can be related to groups and that the equity is ensured at the group level, typically preventing some minority group to be disadvantaged.

At 207 in Figure 2, the server outputs the Pareto-set to a decision-maker. At 208 in Figure 2, server 100 receives a point in the Pareto-set which translates to a target exposure within the decision space. This target exposure corresponds to an exposure across the objects in the set. The target exposure in an embodiment may be defined by a decision-maker who sets a defined utility/fairness trade-off, which could be set on a case-by-case basis or more generally as fixed constraints (e.g., set constraints where fairness does not fall below a predefined threshold). In one embodiment, the decision-maker may be an administrator, or in an alternate embodiment the decision-maker may be an automated system.

At 210 in Figure 2, using the target exposure received from the decision-maker as their best trade-off in Pareto-set, server 100 determines a distribution over rankings (e.g., a weighted set of rankings) which achieve on average the target exposure for the objects in the set, where each ranking of the distribution over rankings corresponds to a vertex in the decision space. In one embodiment, determining the distribution over rankings is performed as follows: (i) an arbitrary vertex of the decision space is determined; (ii) a line is drawn starting at the arbitrary vertex through the target exposure received from the decision-maker until the line intersects a face of the decision space; (iii) the steps (i) and (ii) are repeated on the intersected face of the decision space using the intersection point instead of the decision-maker's target exposure, until the newly intersected face is a vertex. Steps (i)-(iii) can be performed as many times as there are objects in the set, depending on when the intersection is a vertex at step (iii). Each vertex of the decision space has an associated proportion.

At 212 in Figure 2, server 100 deploys the distribution over rankings by selecting a sequence of rankings for the set of objects from the distribution over rankings in accordance with their proportions.

In other embodiments, the method according to the embodiments of Figure 2 may be performed at client device 102 partially or completely. In yet other embodiments, the method may be performed at a different server or client devices or on a plurality of servers in a distributed manner.

In one exemplary embodiment, a non-personalized query (e.g., a query made by an anonymous user) is received repeatedly for general points of interest at a defined map location. The set of objects in this exemplary embodiment may be a list of general points of interest such as restaurants, museums, shops, and gas stations. In another exemplary embodiment, a non-personalized keyword query is received repeatedly by a search engine. The set of objects in this exemplary embodiment may be a list of links to documents such as web pages. As these queries are repeated over time, the ordering of the sets of objects varies in accordance with their respective sequence of rankings to achieve their target exposure.

### 3. Exposure

Exposure, also known as "Attention" or "Examination" in the field of Information Retrieval (IR), may be defined as the probability that the user will examine an object (e.g., document) in a certain location of the Search Engine Result Page (SERP). Exposure values (e.g., forming part of the list of exposures received at 202(iii) in Figure 2) can be captured by eye-tracking studies or by interventional harvesting (e.g., by putting the same document for the same query at two different ranks). The exposure values may also be determined using "click models" (i.e., user browsing models) in the Information Retrieval community (see Chuklin et al., "Click models for web search", published in Synthesis Lectures on Information Concepts, Retrieval, and Services, 7(3): 1-115, July 2015). Most of the time, these models try to explain the click behaviour by a natural sequence of two steps: first examine (or turn her attention to) an item or its representative snippet, then click on it, if it looks attractive.

From the consumer's (i.e., user's) viewpoint, the consumer desires the more relevant objects be given a higher exposure, so as not to spend time looking for relevant objects in a poorly visible location of the SERP. This desire by the consumer may be expressed by defining the utility of a ranking as the dot product between an exposure vector (i.e., the vector made up of the exposure values provided by the ranking to each object) and a gain vector (i.e., the vector made up of the gains of each object, the gain of an object being defined by an arbitrary monotonically increasing function of the relevance score of the object). Known information retrieval utility measures such as Discounted Cumulative Gain (DCG) and Expected Reciprocal Rank (ERR) reflect this formulation, with particular choices of the exposure model parameters. DCG assumes that the exposure of an object at rank k is given by $1/\log_2(1 + k)$ and that the gain function g(d) is given by $g(d)=2^{rel(d)}$, where $rel(d)$ is the relevance score of d. The ERR measure is based on the cascade model and assumes that the exposure depends on the relevance of previous objects in the list; in particular, once a user is satisfied with an object, the exposure of the next objects in the list will be zero.

From a provider's viewpoint, the provider would like that their own objects have a higher exposure in the SERP. But because there are many providers, a non-disparate treatment of the objects presented to users is desired.

Both viewpoints, which correspond respectively to the "Utility" objective and the "Fairness" criteria, are expressed in the methods disclosed herein in terms of "Exposure", which acts as a link between objectives of an ideal ranking: the utility objective (e.g., which represents the user or the consumer viewpoint) and the fairness criterion (e.g., which represents the object provider or supplier viewpoint).

### 4. Permutohedrom

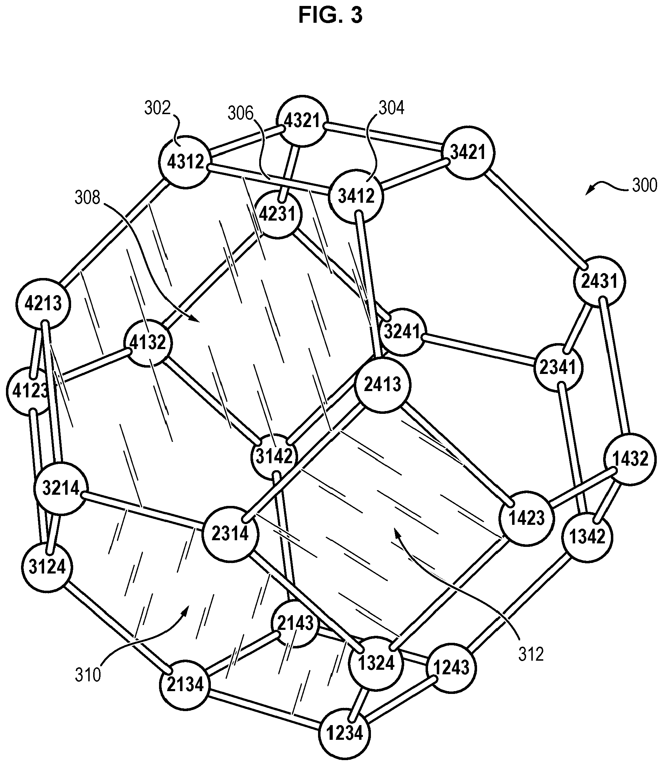

The Permutohedron is a polytope, where each vertex corresponds to a particular ranking or permutation over n objects (e.g., documents) and the polytope is the convex hull of these vertices. This polytope is embedded in an n-dimensional space, but is actually (n - 1) dimensional. For example, Figure 3 represents, for n=4 objects, a 3-D object 300, which looks somewhat like a ball with a mix of hexagonal and squared facets. Consider the vertex (4 3 1 2) at 302: it represents a ranking that puts $d_1$ at rank 4, $d_2$ at rank 3, $d_3$ at rank 1 and $d_4$ at rank 2. Consider now the edge 306 linking the vertices (4 3 1 2) at 302 and (3 4 1 2) at 304: it represents any distribution (or convex combination) over the two rankings. In addition, every facet of the 3-D object 300 represents a partial ordering of the n objects into two groups. For example, the facet 308 represents a partial ordering where $d_3$ is always first (i.e., $d_3$ @ rank 1) followed by the three other documents in any order; the facet 310 represents a partial ordering where $d_4$ is always last (i.e., $d_4$ @ rank 4) preceded by the three other documents in any order; and the squared facet 312 represents a partial ordering where $d_1$ and $d_3$, in any order for the first two positions, followed by $d_2$ and $d_4$, in any order for the last two positions (i.e., $(d_1$ and $d_3)$ before $(d_2$ and $d_4)$).

More generally, each face of dimension (n - k), which generalizes the notion of facet by following a hierarchy with decreasing dimensionality (e.g., facet → edge → vertex for n=4) represents all possible distributions (or convex combinations) respecting a certain partial ordering of the n objects into k groups. Referring again to Figure 3, the edge 306 linking the vertex (4 3 1 2) at 302 and the vertex (3 4 1 2) at 304 corresponds to the partial order: $d_3$ first, $d_4$ second, followed by $d_1$ and $d_2$ in any order.

### 5. Caratheodory's Theorem

Caratheodory's theorem states that any point in the convex hull of a set P of m points $v_i$, embedded in a d-dimensional space ($v_i \in$ by $R^d \; \forall i = 1, ..., m$) can be decomposed into a convex combination of at most (d+1) of these points.

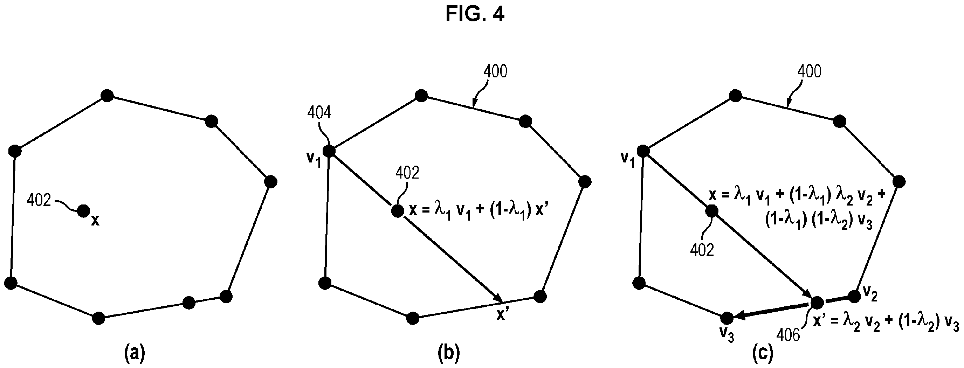

When the permutohedron is considered as a special case, any point of the permutohedron, which is a d-dimensional object with d = (n-1) (n designating the number of objects), can be decomposed into a distribution over at most n rankings, which in an embodiment a procedure known as the GLS (Grotschel, Lovasz and Schrijver) is used to determine one such decomposition (in general, more than one single decomposition is possible). An example of the GLS procedure (see Grotschel et al., "Geometric Algorithms and Combinatorial Optimization", published in Springer Science & Business Media, December 2012) is illustrated in Figure 4 as it is applied to the methods disclosed herein.

Figure 4(a) shows the point x to be decomposed at 402. As shown in Figure 4(b), the procedure starts by choosing any vertex $v_1$ at 404 of the polytope 400 and in extending the line segment going from $v_1$ to x (the point 402 to be decomposed) until intersecting a face of dimension (n - 2). This gives a new point x', where x can be expressed as a convex combination of $v_1$ and x'(i.e., $x = \lambda_1 v_1 + (1-\lambda_1) x'$).

As shown in Figure 4(c), the point x' on the (n -2)-dimensional face can itself be decomposed by the same procedure by choosing any vertex belonging to the face of x' (referred to as $v_2$) and extending the line segment $v_2$ - x' until it intersects with a face of dimension (n - 3). In the case shown in Figure 4(c), n = 3 so that this face is a vertex ($v_3$) and the procedure stops at this point: the initial point x is now expressed as the convex combination of three vertices (i.e., $x = \lambda_1 v_1 + (1-\lambda_1)\lambda_2 v_2 + (1-\lambda_1) (1-\lambda_2)v_3$). In general, with higher values of n, these recursive steps are repeated, each time considering a face of decreasing dimension until reaching a face of dim 0 (i.e., a vertex).

### 6. Notation

The following notation is used for the purpose of describing the methods set forth herein:

    a) q is a query, which may be repeated an indefinite number of times by a single anonymous user (i.e.,

consumer); it shall be noted that the query is not necessarily a textual query in the usual 'Information Retrieval' sense but should be understood in a broad sense, as it also includes any triggering context in a "Recommendation" setting.

b)for query $q$, there is a fixed candidate set of $n$ objects (e.g., documents), $D = (d_1, \ldots, d_n)$, whose relevance scores with respect to query q are denoted as $\rho = (\rho_1, \ldots, \rho_n)$; and

c)A ranking policy $\pi(q)$ is a distribution (i.e., a convex combination) over m rankings with $m \leq n$

$$\sigma_i \, (i = 1, \ldots, m): \pi(q) = \sum_{i=1}^{m} \alpha_i \sigma_i$$ where

each ranking $\sigma_i$ maps each object $d_j$ to a rank $\sigma_i(d_j)$. Using a distribution on at most n rankings ($m \leq n$) is a consequence of the Caratheodory's theorem in the Permutohedron. As described in more detail below, ranking policy $\pi(q)$ is deployed as a sequence of rankings that is as close as possible to the proportions given by the $\alpha_i$ coefficients. The goal is to find a set of policies $\pi^*(q)$ which are optimal with respect to a multi-objective optimisation problem including utility and fairness criteria.

### 7. Global Strategy

The disclosed method uses a ranking policy denoted as $\pi(q)$ that is both useful and fair by expressing everything (in particular consumer-oriented utility and provider-oriented fairness) in terms of a single set of decision/optimization variables, which are referred to in this disclosure as "control levers". The control levers define an *exposure vector*, denoted as $\epsilon_{\pi(q)}$. This vector is indexed by object (the first component corresponds to document $d_1$, etc.). This means that, instead of working directly in a decision spaced defined using a *Permutohedron* where vertex coordinates represent ranks, a modified polytope is used by the disclosed method, called the *Expohedron*, where vertex coordinates represent the exposure associated with the corresponding rank. In other words, vertices of the *Expohedron* represent permutations of exposures provided to the objects by corresponding rankings. While there exists a 1:1 correspondence between the *Permutohedron* and the *Expohedron*, the *Expohedron* directly represents the control lever space (i.e., decision space). Referring again to *the exposure vector*, denoted as $\epsilon_{\pi(q)}$: the ranking policy is a distribution over m rankings maximum ($m \leq n$),

$$\epsilon_{\pi(q)} \sum_{i=1}^{m} \alpha_i \, \epsilon_{\sigma_i}$$ , where $\epsilon_{\sigma_i}$ is the vector of exposures that the ranking $\sigma_i$ is offering to the objects.

This optimization problem may be expressed as a multi-objective optimization problem and the Pareto-set (i.e., the set of feasible non-dominated solutions) can be determined by geometric reasoning. Then, a decision-maker can choose one particular trade-off in this Pareto-set, which is one target point in the decision space (i.e., a target exposure). This point can be decomposed as a convex combination of at most n rankings, as known from Caratheodory's theorem. Once this combination is determined, it (i.e., the ordering of a set of objects from the distribution over rankings) may be deployed through a fair scheduling strategy, which in one embodiment uses low-discrepancy sequences, such as the golden-ratio low-discrepancy sequences (see "Weighted Round Robin (Weighted Random Integers) Using The Golden Ratio Low Discrepancy Sequence", published on the Internet at demofox.org, June 2020). Those skilled in the art will appreciate that other scheduling strategies could be used in alternate embodiments such as algorithms similar to m-balanced words or, equivalently, Stride Scheduling.

An advantage of the disclosed method is that most steps may be performed using geometric reasoning, which in practice, leads to simple algebraic, closed-form solutions. A further advantage of the disclosed method is that it offers a time complexity in $O(n^2 \log(n))$. Yet a further advantage of the disclosed methods is that it operates in an *n*-dimensional space, instead of an *n*!-dimensional space or an $n^2$-dimensional space. Consequently, the number of decision/optimization variables required by the disclosed method is not larger than *n*, allowing any optimal solution as a distribution over only *n* rankings at maximum to be implemented.

The disclosed method can be developed for a general class of exposure models, called the "Position-Based Model" (PBM). This family of models assumes that the exposure of an object only depends on its rank. Each rank *k* is then associated with a parameter $\gamma_k$ which represents the probability that this rank will be examined by the user.

### 8. The Expohedron associated with the PBM model

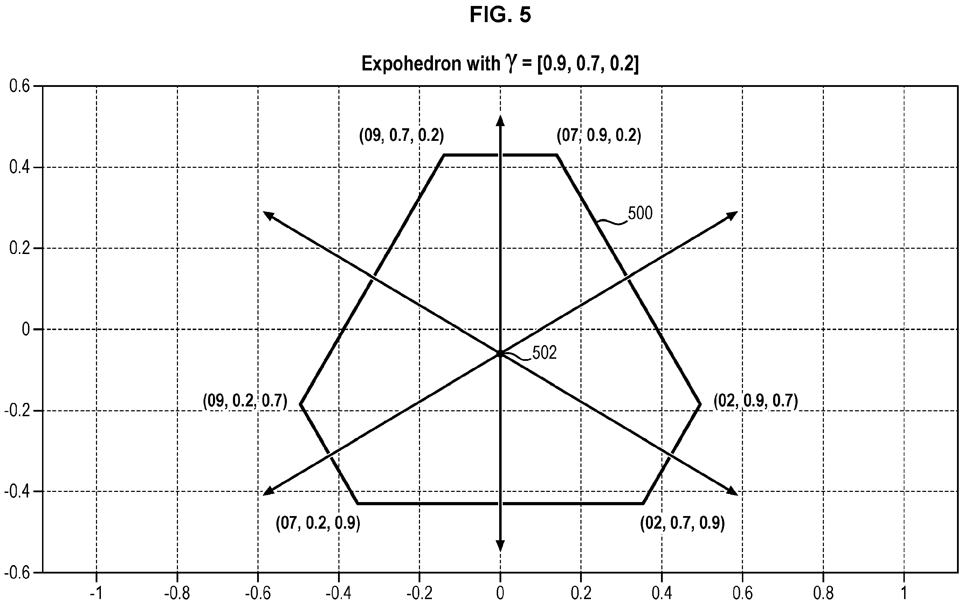

In embodiments, the disclosed method uses a PBM-type exposure model, characterized by a fixed set of *n* parameters $\gamma = (\gamma_1, \gamma_2, \ldots, \gamma_n)$. Without loss of generality, it is assumed that the $\gamma_k$ are sorted by decreasing value. This does not necessarily imply that the examination probabilities are decreasing with the rank, even if it often the case in practice. Under this model, the sum of object (e.g., document) exposures in a ranked list is always the same and equal to $\sum_{k=1}^{n} \gamma_k$ . A particular example of *Expohedron* for n = 3 is shown in Figure 5. Due to the fact that the total sum of exposures is a constant, the *Expohedron* lies on a plane embedded in a 3D-space. Figure 5 represents the projection on that plane.

Any point in the *Expohedron* shown in Figure 5 represents a particular exposure vector and this vector can be realized by a distribution of, maximum, three different permutations or rankings. The barycenter 502 of the hexagon 500 corresponds to equal exposure (i.e., demographic fairness) to each object (e.g., document), and can be realized as the uniform distribution over only three different rankings.

There is an easy mathematical way to check whether a point belongs to the *Expohedron,* and this way is exploited by the proposed method as explained later. This is called the majorization condition in mathematics which provides that a point $\epsilon = (\epsilon_1, ..., \epsilon_n)$ belongs to the *Expohedron* if and only if $\epsilon$ is majorized by $\gamma$, which is written as : $\epsilon < \gamma$.

The mathematical definition of majorization is the following: $\epsilon < \gamma$ iif: $\sum_{i=1}^{k} \epsilon_i^{\downarrow} \leq \sum_{i=1}^{k} \gamma_i^{\downarrow} \ \forall k < n$

and $\sum_{i=1}^{n} \epsilon_i^{\downarrow} = \sum_{i=1}^{n} \gamma_i^{\downarrow}$ with $x\downarrow$ the vector with the same components as *x*, but sorted in descending order.

The notion of "zones" are defined as sets of points that have coordinates (i.e., exposures) in the same order. To be more precise, these points correspond to vectors such that the indices of the components sorted in increasing order are the same. In python for example, it corresponds to arrays for which the outputs of the argsort function are identical. There are as many zones as vertices in the *Expohedron* and each zone contains only one vertex. A zone is an unbounded pyramid, whose apex is the barycenter and whose semi-axes correspond the lines joining the *Expohedron* barycenter to the barycenter of each facet adjacent to the unique vertex that the zone contains.

Given a point in the *Expohedron* decision space, which has coordinates given by $\epsilon_{\pi(q)}$, the method specifies:

(a) How to define the Utility of a ranking policy $\pi(q)$ in this decision space;
(b) How to define different Fairness measures for ranking policies in this decision space;
(c) How to determine the Pareto-set (the set of non-dominated policies) corresponding to the Multi-Objective Optimisation (MOO) problem, balancing Utility and Fairness;
(d) How to decompose a particular choice of a target exposure by the decision-maker on this Pareto-set as a distribution over at most *n* rankings; and
(e) How to deploy a distribution over at most n rankings with an efficient and effective scheduling strategy.

### 9. Utility in the PBM-Expohedron

Starting with the Utility criterion, which provides that objects with high relevance score or, more generally, with high gain should have a higher exposure. Without loss of generality, $\rho$ is defined as the vector of the gains (or relevance scores, if the gain function is chosen as the identity), normalized in the same units as the exposure vector, in the sense that $\sum_{i=1}^{n} \rho_i = \sum_{i=1}^{n} \gamma_i$, which is a constant for a given PBM. This implies that $\rho$ is located on the same hyperplane as the exposure vectors and that they can be directly compared, composed or visualized jointly on the projected *Expohedron.*

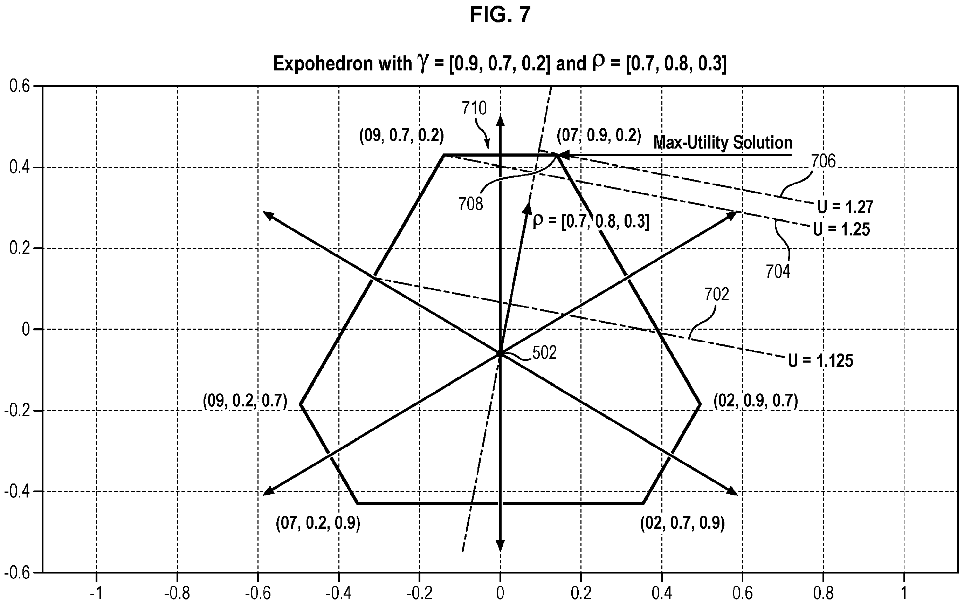

"Utility" may be expressed as the dot product between the relevance vector and the exposure vector: $U(\epsilon) = \rho^T. \epsilon$. Consequently, equi-utility surfaces in the *Expohedron* are hyperplanes whose normal is equal to $\rho$, as illustrated in Figure 7 for hyperplanes 702, 704, and 706. This definition of Utility corresponds to the standard discounted cumulative gain (DCG) definition of Utility in Information Retrieval for a particular choice of the gain function as $2^{relevance}$ and of the exposure parameters, namely:

$$\gamma_i = \frac{1}{log_2(i+1)}.$$

With this mathematical expression of the Utility, the max-Utility ranking policy in the *Expohedron* may be found using the point $\epsilon^*$ (or sometimes the set of points) located on a face of the *Expohedron* whose projection on the $\rho$, i.e., $\frac{(\epsilon^*)^T \cdot \rho}{\|\rho\|}$, is the largest (see for example the point 708 on the face 710 in Figure 7). It is not necessary to project all the points of the *Expohedron* to find this max-Utility ranking: it is the vertex that is located in the same zone as $\rho$, which necessitates a single sorting operation. This is an equivalent formulation to the Probability Ranking Principle in Information Retrieval (see Stephen Robertson, "The Probability Ranking Principle in IR", in Journal of Documentation, 33:294-304, December 1977).

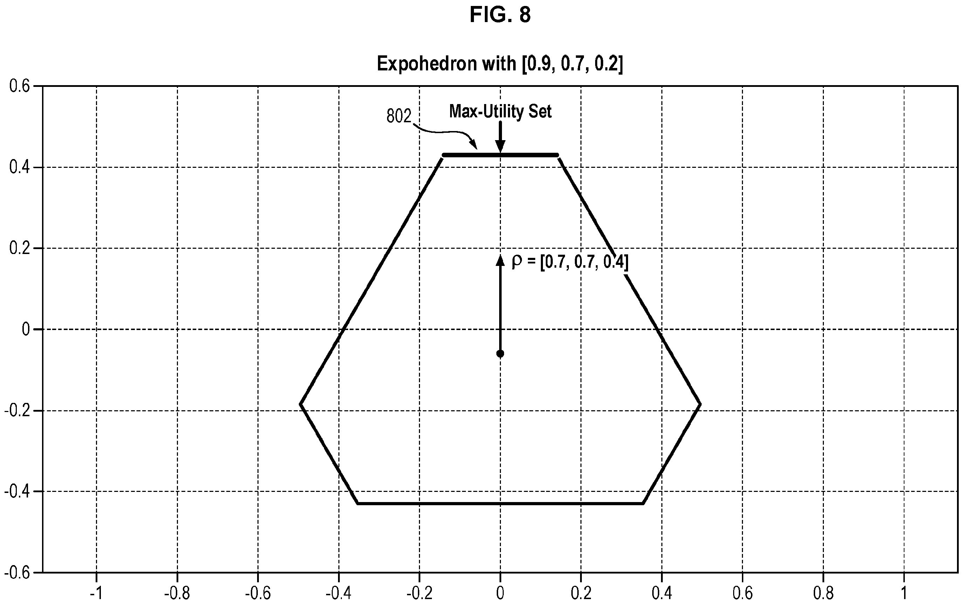

When the relevance vector has ties (i.e., where at least two elements of the relevance vector are equal), as represented on Figure 8 with ties (as shown in the relevance vector <0.7,0.7,0.4>), the whole face 802 constitutes the set of max-Utility solutions.

### 10. Fairness in the PBM-Expohedron

In this section the fairness criterion is expressed in the *Expohedron* framework. The individual demographic fairness criterion states that, ideally, all objects (e.g., documents) should have the same exposure. As the sum of the exposures is a constant, it means that the target exposure of the demographic fairness policy is the barycenter of the *Expohedron:* $\beta = \left(\frac{\sum_{i=1}^{n} \gamma_i}{n}, ..., \frac{\sum_{i=1}^{n} \gamma_i}{n}\right)$. So, the fairness criterion can be defined as a quadratic function, for instance as the proximity (or minus the distance) to the barycenter:

$$F_d(\epsilon) = -\|\epsilon - \boldsymbol{\beta}\|_2^2.$$

Considering now Meritocratic Fairness, the ideal exposure vector should be proportional to the relevance vector or, more generally, to the merit vector denoted as $\rho'$, where the merit of an object is defined as a monotonically increasing function of the relevance score of this object or, equivalently, of its gain (the proportionality constant is equal to one here, when working with a merit vector normalized in the same units as the exposure vector, in the sense that $\sum_{i=1}^{n} \rho_i' = \sum_{i=1}^{n} \gamma_i)$. Note that $\rho$ and $\rho'$ are located in the same zone, because of the monotonically increasing relationship linking them. Often, $\rho$ and $\rho'$ are chosen as equal, and identical to the relevance score vector (i.e., the gain and merit functions are chosen as the identity function). Formally, the meritocratic fairness of a policy with exposure $\epsilon$ can be defined as a quadratic function, for instance as the proximity (or minus the distance) to the normalised relevance vector:

$$F_m(\epsilon) = -\|\epsilon - \boldsymbol{\rho'}\|_2^2.$$

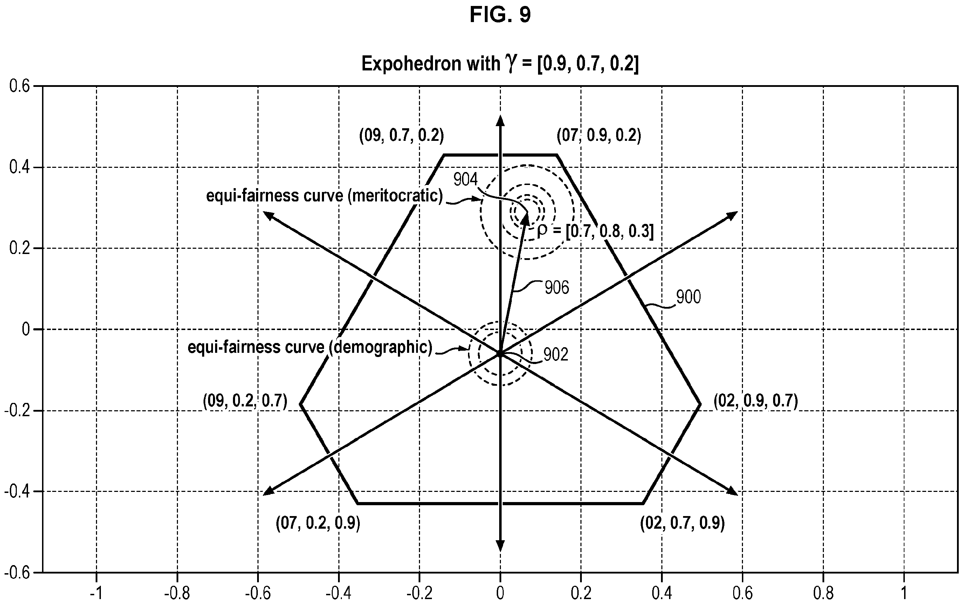

As illustrated in Figure 9 where $\rho$ and $\rho'$ are chosen as equal, equi-fairness surfaces are hyperspheres centred around $\beta$ or $\rho$, for demographic fairness 902 and meritocratic fairness 904, respectively, in the *Expohedron* ($n$=3) 900, the optimal Demographic and Meritocratic fairness equi-fairness curves are the circles that surround the optimal fairness points 902 and 904, respectively, where the vector 906 is the relevance vector.

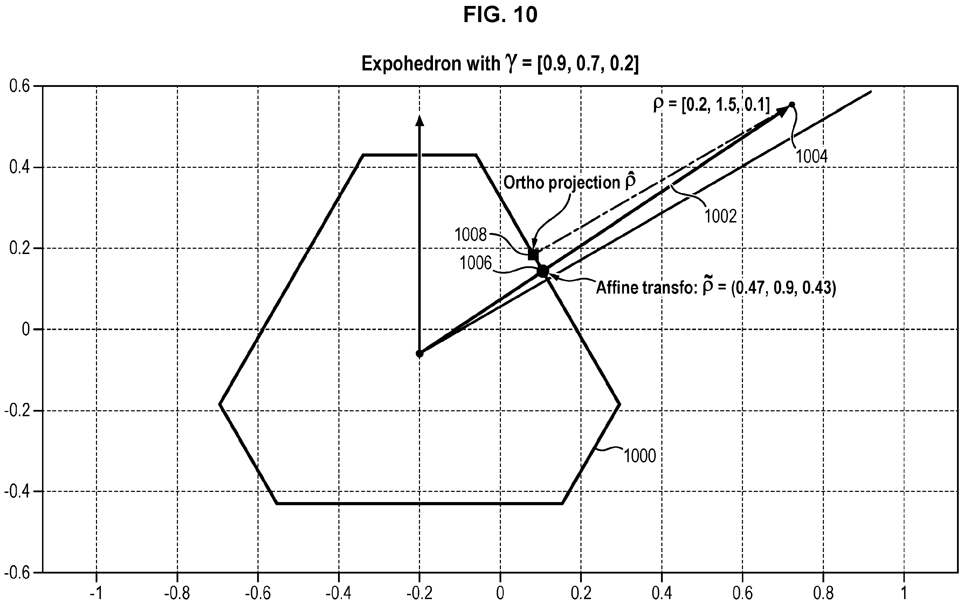

It could happen that the merit vector is outside the *Expohedron,* namely when $\gamma \not\succ \rho'$ (i.e. the majorization condition is not fulfilled). In this case, it is possible to relax the pure proportionality relationship into an affine relationship, with an offset as small as possible while still being in the *Expohedron* (e.g., the definition of fairness as expressed in Biega et al., "Overview of the TREC 2019 Fair Ranking Track", in arXiv:2003.11650, March 2020, and in Diaz et al., "Evaluating Stochastic Rankings with Expected Exposure", in Proceedings of the 29th ACM International Conference on Information & Knowledge Management, pages 275-284, October 2020). This amounts to choosing a target vector which is at the intersection of the merit vector axis and the border of the *Expohedron.* Figure 10 shows an example in which the optimal point 1004 identified by the merit vector 1002 is unfeasible because it is outside the *Expohedon* 1000. This new feasible target vector is indicated at point 1006. This can be computed as follows:

Denote $G_k = \sum_{i=1}^{k} \gamma_i$ and $R_k = \sum_{i=1}^{k} \rho_i'^{\downarrow}$. The intersection of the relevance vector axis and the border of the Expohedron is given by the affine transformation (referred to in Figure 10 as "Affine transform") of the nor-

malised merits $\tilde{\rho}_i = a\rho'_i + b$, with:

$$b = G_n \max_{k=1,2,\ldots,n-1} \frac{\frac{G_k}{G_n} - \frac{R_k}{R_n}}{k - n\frac{R_k}{R_n}},$$ which expresses that

$\sum_{i=1}^{k} \tilde{\rho}_i \leq \sum_{i=1}^{k} \gamma_i$, and that $b$ is the smallest value that ensures that condition $\forall k < n$; and $a = \frac{G_n - nb}{R_n}$,

which expresses that $\sum_{i=1}^{n} \tilde{\rho}_i = \sum_{i=1}^{n} \gamma_i$.

An alternative solution to the affine transformation for choosing an alternative but feasible meritocratic fairness point is to compute an orthogonal projection which result for the example shown in Figure 10 is indicated at point 1008.

### 11. Pareto-set in the PBM-Expohedron

Having determined how to compute and how to optimize the Utility and Fairness separately, the complete Pareto-set of the multi-objective Utility-Fairness Problem is computed.

Explaining the method intuitively and geometrically, the method starts from one extreme of the Pareto-set, namely the 'purely fair' solution. Then, to draw the entire Pareto-set, the gain vector direction is followed: it may be shown that all these points are not dominated by any other point in the *Expohedron* and correspond to some optimal trade-off between fairness and utility. If the gain vector direction is always followed, the border of the *Expohedron* will necessarily be crossed at a certain point, which means that the solution is no longer feasible. The direction of the gain vector projected on the ($n$ - 2)-dimensional facet that was just crossed is then followed. By following this new direction, a new face is crossed which is this time ($n$-3-dimensional and, once again, the direction of the gain vector projected on that new face should be followed. Finding the projection of the gain vector of any face has a closed-form expression. This path-following procedure is re-iterated until finally a non-dominated max-Utility solution is reached. Along that path, every point corresponds to a strongly non-dominated solution of the utility-fairness trade-off, in other words, the path is a Pareto-set.

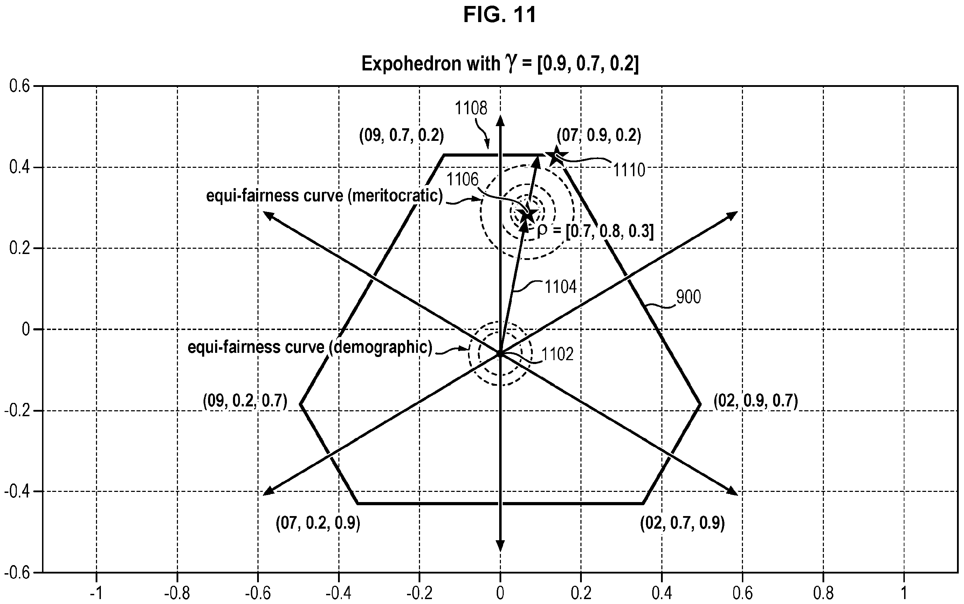

The path-following procedure described above is illustrated in Figure 11 for $n$ = 3 and for gain and merit functions chosen as the identity (i.e., the merit and the gain of a document are identical to its relevance score). The Pareto-set is defined from 1102 to 1110 if the demographic fairness criterion is used, and from 1106 to 1110 if the meritocratic fairness criterion is used. The Pareto-set starts from the barycenter 1102 on the graph (if the demographic fairness criterion is used), and the direction of the line segment 1104 (which is the gain vector axis) is followed, which goes through the meritocratic fairness point 1106 on the graph, intersects the edge 1108, or the facet, that corresponds to mixing rankings where objects (e.g., documents) $d_1$ and $d_2$ are permuted in the first two ranks and then this facet is followed until the max-Utility solution is reached, represented as the star 1110 on the graph. Note if the meritocratic fairness criterion were used, the Pareto-set would start at point 1106.

More formally described, the Pareto-optimal set is the union of $(n - 1)$ line segments that connects $v^{(i-1)}$ to $v^{(i)}$, for $i$ = 1, ..., $(n - 1)$. In the following, without loss of generality and for the sake of notation simplicity, it is assumed that the objects (e.g., documents) are sorted by decreasing order of gain, namely $\rho = (\rho_1, \rho_2, ..., \rho_n)$ with $\rho_1 \geq \rho_2 \geq ... \geq \rho_n$. The initial point $v^{(0)}$ is either $\beta$ or $\rho'$ (replaced by $\rho$ if $\rho'$ is infeasible), depending on whether demographic or meritocratic fairness are considered. When establishing the Pareto-set, the points are always located in the same zone (i.e., the zone of the max-Utility or PRP vertex; it is noted that the barycenter belongs to all zones, as all zones have the barycenter as apex) because, the order of the components of the corresponding exposure vectors is not changed when a vector in the direction of the gain vector is incrementally added to these exposure vectors, even if it is projected on a face.

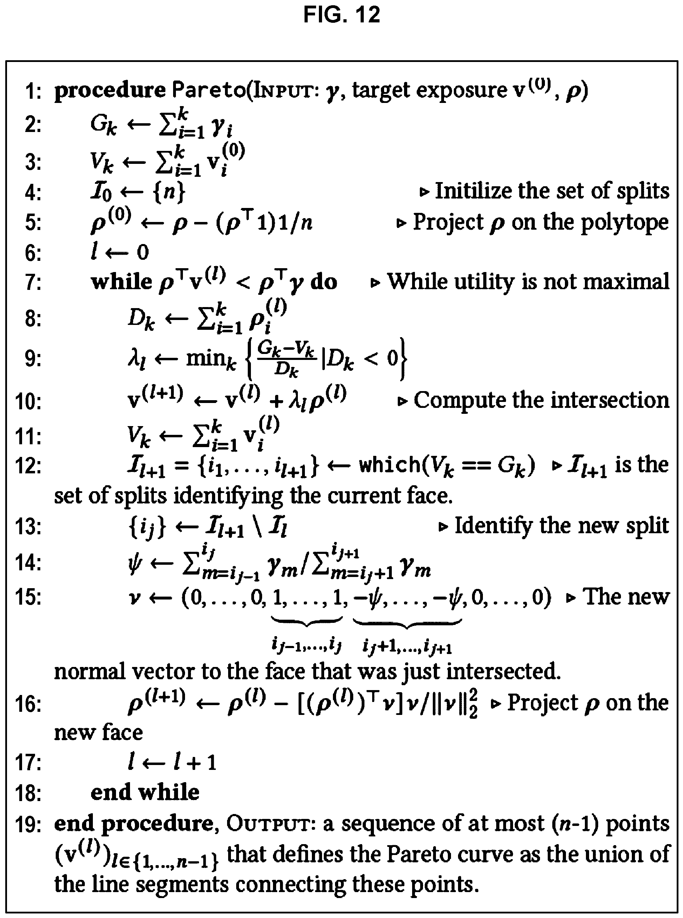

An embodiment of the Pareto-set building method is set out in Figure 12 in pseudo code. More specifically, Figure 12 sets forth pseudo code for Pareto-set identification, which assumes w.l.o.g. that the gain vector $\rho$, the vector $\gamma$ of PBM parameters associated to each rank, and the initial point $v^{(0)}$ are in an ordered preserving zone where the values are ordered from greatest to least great.

## 12. GLS Decomposition in the PBM-Expohedron

As set forth previously, a point in the Pareto-set chosen by the decision-maker translates to a target exposure within the decision space. This point in the Pareto-set can be decomposed as a convex combination of at most $n$ rankings. To begin this decomposition problem, the method particularizes and adapts the general *GLS* procedure to the structure of *Expohedron* polytope.

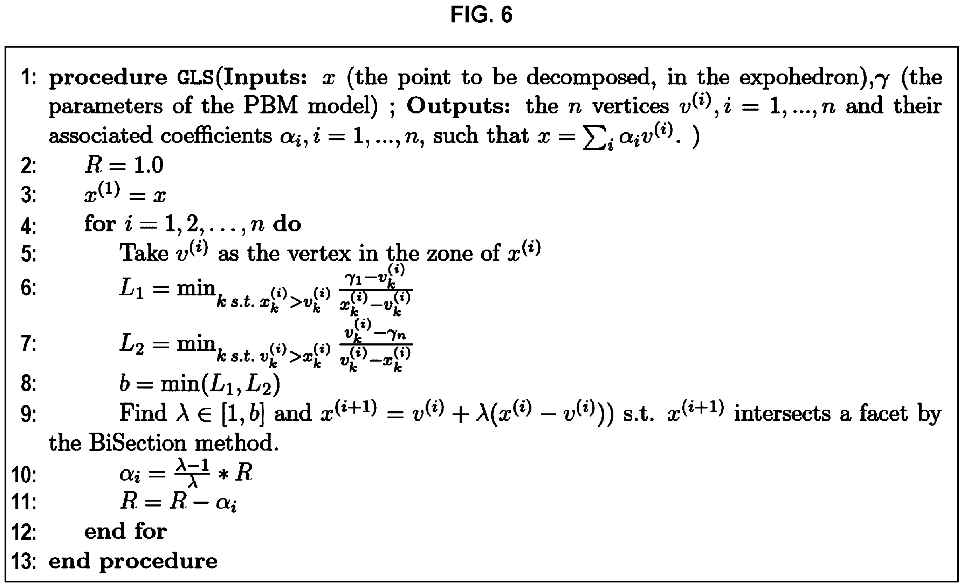

One embodiment for realising the decomposition is set forth in pseudocode in Figure 6. The decomposition method in Figure 6 exploits the fact that, once a point is on a facet (or a face of lower dimension), a vertex on this facet (or face) may be found by choosing the vertex of the zone in which the point is located, which can be done by sorting the components of the point (see line 5 in Figure 6). Note that this step has $O(n \log n)$ complexity.

At line 9 in Figure 6, the method finds the point which extends the $v^{(i)} \rightarrow x^{(i)}$ line segment until it reaches a facet (i.e., a face): this intersection point ($x^{(i+1)}$) defines the new point to be decomposed recursively. At each iteration in the loop, the new point ($x^{(i+1)}$) is on a face of dimension $(n - i)$, meaning that the final point will always be a vertex (dimension=0). As finding the intersection is equivalent to finding the root of the "majorization" condition (i.e., the point where the condition value goes from True to False), at line 9 in Figure 6 the Bisection method (i.e., a numerical method that find a root of a given function) is applied, using the majorization criterion to detect when the method should stop. In addition, the majorization criterion may be exploited to find an efficient upper end-point on the intersection with the face $\lambda$ (where efficient upper end-point is used herein to mean "not too far away from the true intersection"). The computation of this endpoint is performed at lines 6-8 in Figure 6.

The Bisection method itself has a number of iterations which is independent of $n$ (e.g., for 5-10 iterations). But checking the majorization condition inside the Bisection method requires $O(n \log n)$ complexity, so that the total complexity of this method is $O(n^2 \log n)$.

## 13. Policy Deployment through Low-Discrepancy Sequences

Given the decomposition of the target exposure into a distribution over ranking, one of several methods may be used to deploy it in the form of a sequence of rankings.

Instead of relying on stochastic sampling (i.e., random number generators) to deploy a distribution over rankings, *Low-Discrepancy Sequences* may be used in alternate embodiments (see Martin Roberts, "The unreasonable effectiveness of quasirandom sequences", Apr 2018).

Low-Discrepancy Sequences (LDS) are such that for all $t$, the subsequence of rankings $R_1, R_2, ..., R_t$ has low discrepancy (i.e., the proportion of rankings is close to the desired proportion; i.e. proportion of the infinite sequence). Low-Discrepancy sequences are typically quasi-random sequences of numbers in the [0,1] interval that are as close as possible to the uniform distribution, these sequences of floats in [0,1] may be transformed as sequences of rankings with desired proportion by comparing the generated float with the stacked (i.e., cumulated) value of the proportions.

The use of additive- recurrence sequence based on irrational numbers (also called Kronecker, Weyl or Richtmyer sequences) may be used in embodiments, and in particular on the golden ratio, which is in some sense the most irrational number. The general recursive form of the sequence is:

$$s_{n+1} = (s_n + \alpha) \bmod 1$$

with $\alpha = (\sqrt{5} - 1)/2$, which is the value achieving the optimal discrepancy for this additive-recurrence sequence class of LDS.

Low discrepancy sequences do not constitute the sole family of efficient sampling strategies. Strategies based on Stride Scheduling or, equivalently, m-balanced words, can be used as well, with very similar performance.

When expressed in the terms of our problem, a generator of $m$-balanced words produces a sequence of rankings such that, in any pair of subsequences with identical length, the frequency of any ranking differs at most by m. In other words, this generator guarantees that the generated sequence delivers the rankings with proportions as close as possible to the target ones. An important theoretical fact is that the best achievable $m$ is, in our case, at most equal to $n$ - 1. An algorithm capable of efficiently generating $m$-balanced sequences of rankings, given a certain distribution of distribution of rankings, is given in Algorithm 1 of Shinya Sano, Naoto Miyoshi, and Ryohei Kataoka. 2004. m-Balanced words: A generalization of balanced words. Theoretical Computer Science 314, 1-2 (Feb. 2004), 97-120. https://doi.org/10.1016/j.tcs.2003.11.021. This generator is equivalent to the well-known Stride Scheduling algorithm, used to generate fair sequences in resource (CPU) management for concurrent processes as for instance described in C. A. Waldspurger and E. Weihl. W. 1995. Stride Scheduling: Deterministic Proportional- Share Resource Management. Technical Report. Massachusetts Institute of Technology, USA.

### 14. Computer program product

The methods set forth for ranking objects may be provided as a computer program product comprising code instructions to execute these methods (for example using data processors 112 of the server 100 and the client devices 120), and storage means readable by computer equipment (for example using memory 113 of the server 100 and the client devices 120) provided with this computer program product for storing such code instructions.

### 15. Miscellaneous

It will be appreciated that various of the above-disclosed and other features and functions, or alternatives thereof, may be desirably combined into many other different systems or applications. Also, various presently unforeseen or unanticipated alternatives, modifications, variations or improvements therein may be subsequently made by those skilled in the art and are also intended to be encompassed by the following claims.

### Claims

1. A computer-implemented method for ranking a set of objects, comprising the steps of:

   receiving the set of objects and a set of objective functions;
   defining a decision space having $n$ decision variables using a Permutohedron, where $n$ is the number of objects to rank and where vertices of the Permutohedron represent permutations of exposures provided to the objects in the set by corresponding rankings;
   determining a Pareto-set for the set of objective functions;
   with a Pareto-optimal point in the Pareto-set, determining a distribution over rankings for the objects in the set using the decision space; where a proportion is associated to each ranking in said distribution and
   selecting a sequence of rankings for the objects in the set from the distribution over rankings in accordance with their proportions.

2. A computer-implemented method according to claim 1, wherein the set of objective functions comprises a quadratic function and a linear function.

3. A computer-implemented method according to claim 2, wherein the quadratic function is a fairness function and the linear function is a utility function.

4. A computer-implemented method according to claim 2, wherein the fairness function is a squared L2-norm of the difference between a vector made up of the decision variables and a target vector.

5. A computer-implemented method according to claim 1 further comprising:

   receiving a relevance score for each object in the set, a list of exposures provided to the objects in the set which are each associated with a rank, a ranking fairness objective function and a ranking utility objective function;
   wherein determining the Pareto-set for the set of objective functions comprises computing the Pareto-set within the decision space considering the ranking fairness objective function and the ranking utility objective function;
   and wherein determining the distribution over rankings for the objects in the set using the decision space comprises receiving a specified point in the Pareto-set which translates to a target exposure across the objects in the set within the decision space, and, using the target exposure, determining a distribution over rankings which achieve on average the target exposure for the objects in the set, each ranking of the distribution over rankings corresponding to a vertex in the decision space.

6. A computer-implemented method according to claim 5, wherein said determining the distribution over rankings for the objects in the set using the decision space further comprises for the number of objects in the set:

(i) determining an arbitrary vertex of the decision space;

(ii) drawing a line starting at the arbitrary vertex through the target exposure until the line intersects a face of the decision space;

(iii) repeating (i) and (ii) on the intersected face of the decision space using the new intersection point instead of the target exposure, until the newly intersected face is a vertex;

wherein each vertex of the decision space has an associated proportion in the distribution over rankings.

7. A computer-implemented method according to claim 5, wherein the objects in the set comprises a plurality of queries.

8. A computer-implemented method according to claim 7, wherein the objects in the set are identified in response to a query.

9. A computer-implemented method according to claim 5, wherein the objects in the set comprises a plurality of recommendations.

10. A computer-implemented method according to claim 9, wherein the objects in the set are identified in response to a map location.

11. A computer program product comprising code instructions which, when said program is executed on a computer, cause the computer to perform the method according to one of claims 1 to 10.

12. A computer-readable medium having stored thereon the computer program product of claim 11.

13. A data processing device comprising a processor configured to perform the method according to any one of claims 1 to 10.

**FIG. 1**

EP 4 086 789 A1

# FIG. 2

Receive as input (i) a set of objects, (ii) a relevance score for each object in the set of objects; (iii) a list of exposures which are each associated with a rank; (iv) a ranking fairness objective function and a ranking utility objective function /—202

Define a decision space using a Permutohedron having $n$ decision variables, where $n$ is the number of objects to rank and where vertex coordinates of the Permutohedron represent exposure associated with the corresponding rank /—204

Considering the ranking fairness objective function and the ranking utility objective function, compute a Pareto-set within the decision space /—206

Output the Pareto-set to a decision-maker /—207

Receive a point in the Pareto-set from the decision-maker which translates to a target exposure within the decision space; the target exposure corresponds an exposure across the objects in the set /—208

Using the target exposure chosen from the Pareto-set, determine a distribution over rankings which achieve on average the target exposure for the objects in the set; each ranking of the distribution over rankings corresponding to a vertex in the decision space /—210

Select a sequence of rankings for the set of objects from the distribution over rankings in accordance with their proportions /—212

# FIG. 3

FIG. 4

(a)

(b)

$x = \lambda_1 v_1 + (1-\lambda_1) x'$

(c)

$x = \lambda_1 v_1 + (1-\lambda_1) \lambda_2 v_2 + (1-\lambda_1)(1-\lambda_2) v_3$

$x' = \lambda_2 v_2 + (1-\lambda_2) v_3$

FIG. 5

Expohedron with $\gamma$ = [0.9, 0.7, 0.2]

EP 4 086 789 A1

## FIG. 6

1: **procedure** GLS(**Inputs:** $x$ (the point to be decomposed, in the expohedron),$\gamma$ (the parameters of the PBM model) ; **Outputs:** the $n$ vertices $v^{(i)}, i = 1, ..., n$ and their associated coefficients $\alpha_i, i = 1, ..., n$, such that $x = \sum_i \alpha_i v^{(i)}$. )

2:      $R = 1.0$

3:      $x^{(1)} = x$

4:      **for** $i = 1, 2, \ldots, n$ **do**

5:          Take $v^{(i)}$ as the vertex in the zone of $x^{(i)}$

6:          $L_1 = \min_{k \ s.t. \ x_k^{(i)} > v_k^{(i)}} \frac{\gamma_1 - v_k^{(i)}}{x_k^{(i)} - v_k^{(i)}}$

7:          $L_2 = \min_{k \ s.t. \ v_k^{(i)} > x_k^{(i)}} \frac{v_k^{(i)} - \gamma_n}{v_k^{(i)} - x_k^{(i)}}$

8:          $b = \min(L_1, L_2)$

9:          Find $\lambda \in [1, b]$ and $x^{(i+1)} = v^{(i)} + \lambda(x^{(i)} - v^{(i)}))$ s.t. $x^{(i+1)}$ intersects a facet by the BiSection method.

10:          $\alpha_i = \frac{\lambda - 1}{\lambda} * R$

11:          $R = R - \alpha_i$

12:      **end for**

13: **end procedure**

FIG. 7

Expohedron with γ = [0.9, 0.7, 0.2] and ρ = [0.7, 0.8, 0.3]

FIG. 8

Expohedron with [0.9, 0.7, 0.2]

EP 4 086 789 A1

EP 4 086 789 A1

**FIG. 9**

Expohedron with $\gamma$ = [0.9, 0.7, 0.2]

## FIG. 10

**Expohedron with $\gamma$ = [0.9, 0.7, 0.2]**

$\rho$ = [0.2, 1.5, 0.1]

1004

Ortho projection $\hat{\rho}$

1008

1002

1006

Affine transfo: $\tilde{\rho}$ = (0.47, 0.9, 0.43)

1000

EP 4 086 789 A1

## FIG. 11

### Expohedron with $\gamma$ = [0.9, 0.7, 0.2]

(09, 0.7, 0.2)

1108

(07, 0.9, 0.2)

1110

1106

equi-fairness curve (meritocratic)

$\rho$ = [0.7, 0.8, 0.3]

1104

900

equi-fairness curve (demographic)

1102

(09, 0.2, 0.7)

(02, 0.9, 0.7)

(07, 0.2, 0.9)

(02, 0.7, 0.9)

EP 4 086 789 A1

## FIG. 12

1: **procedure** Pareto(INPUT: $\gamma$, target exposure $v^{(0)}$, $\rho$)

2: $\quad G_k \leftarrow \sum_{i=1}^{k} \gamma_i$

3: $\quad V_k \leftarrow \sum_{i=1}^{k} v_i^{(0)}$

4: $\quad \mathcal{I}_0 \leftarrow \{n\}$        ▷ Initilize the set of splits

5: $\quad \rho^{(0)} \leftarrow \rho - (\rho^{\top} 1)1/n$        ▷ Project $\rho$ on the polytope

6: $\quad l \leftarrow 0$

7: $\quad$ **while** $\rho^{\top} v^{(l)} < \rho^{\top} \gamma$ **do**        ▷ While utility is not maximal

8: $\quad\quad D_k \leftarrow \sum_{i=1}^{k} \rho_i^{(l)}$

9: $\quad\quad \lambda_l \leftarrow \min_k \left\{ \frac{G_k - V_k}{D_k} | D_k < 0 \right\}$

10: $\quad\quad v^{(l+1)} \leftarrow v^{(l)} + \lambda_l \rho^{(l)}$        ▷ Compute the intersection

11: $\quad\quad V_k \leftarrow \sum_{i=1}^{k} v_i^{(l)}$

12: $\quad\quad \mathcal{I}_{l+1} = \{i_1, \ldots, i_{l+1}\} \leftarrow \mathrm{which}(V_k == G_k)$   ▷ $\mathcal{I}_{l+1}$ is the set of splits identifying the current face.

13: $\quad\quad \{i_j\} \leftarrow \mathcal{I}_{l+1} \setminus \mathcal{I}_l$        ▷ Identify the new split

14: $\quad\quad \psi \leftarrow \sum_{m=i_{j-1}}^{i_j} \gamma_m / \sum_{m=i_j+1}^{i_{j+1}} \gamma_m$

15: $\quad\quad v \leftarrow (0, \ldots, 0, \underbrace{1, \ldots, 1}_{i_{j-1}, \ldots, i_j}, \underbrace{-\psi, \ldots, -\psi}_{i_j+1, \ldots, i_{j+1}}, 0, \ldots, 0)$   ▷ The new normal vector to the face that was just intersected.

16: $\quad\quad \rho^{(l+1)} \leftarrow \rho^{(l)} - [(\rho^{(l)})^{\top} v] v / \|v\|_2^2$   ▷ Project $\rho$ on the new face

17: $\quad\quad l \leftarrow l + 1$

18: $\quad$ **end while**

19: **end procedure**, OUTPUT: a sequence of at most ($n$-1) points $(v^{(l)})_{l \in \{1, \ldots, n-1\}}$ that defines the Pareto curve as the union of the line segments connecting these points.

Europäisches
Patentamt

European
Patent Office

Office européen
des brevets

## EUROPEAN SEARCH REPORT

**Application Number**

EP 21 30 6565

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/073538 A1 (LEISHMAN PETER [CH] ET AL) 15 April 2004 (2004-04-15) <br> * figure 6 * <br> ----- | 1-13 | INV. <br> G06F16/953 <br> G06F16/29 |
| | | | **TECHNICAL FIELDS SEARCHED (IPC)** <br><br> G06F |

The present search report has been drawn up for all claims

| Place of search | Date of completion of the search | Examiner |
|---|---|---|
| The Hague | 11 March 2022 | Rameseder, Jonathan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 21 30 6565**

This annex lists the patent family members relating to the patent documents cited in the above-mentioned European search report.
The members are as contained in the European Patent Office EDP file on
The European Patent Office is in no way liable for these particulars which are merely given for the purpose of information.

**11-03-2022**

| Patent document cited in search report | Publication date | Patent family member(s) | Publication date |
|---|---|---|---|
| US 2004073538 A1 | 15-04-2004 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 2104801

### Non-patent literature cited in the description

- **CHUKLIN et al.** Click models for web search. *Synthesis Lectures on Information Concepts, Retrieval, and Services,* July 2015, vol. 7 (3), 1-115
- **GROTSCHEL et al.** Geometric Algorithms and Combinatorial Optimization. *Springer Science & Business Media,* December 2012
- *Weighted Round Robin (Weighted Random Integers) Using The Golden Ratio Low Discrepancy Sequence,* June 2020
- **STEPHEN ROBERTSON.** The Probability Ranking Principle in IR. *Journal of Documentation,* December 1977, vol. 33, 294-304
- **BIEGA et al.** Overview of the TREC 2019 Fair Ranking Track. *arXiv:2003.11650,* March 2020
- **DIAZ et al.** Evaluating Stochastic Rankings with Expected Exposure. *Proceedings of the 29th ACM International Conference on Information & Knowledge Management,* October 2020, 275-284
- **MARTIN ROBERT.** *The unreasonable effectiveness of quasirandom sequences,* April 2018
- **SHINYA SANO ; NAOTO MIYOSHI ; RYOHEI KATAOKA.** m-Balanced words: A generalization of balanced words. *Theoretical Computer Science,* February 2004, vol. 314 (1-2), 97-120
- Stride Scheduling: Deterministic Proportional- Share Resource Management. **C. A. WALDSPURGER ; E. WEIHL. W.** Technical Report. Massachusetts Institute of Technology, 1995